# EUROPÄISCHE PATENTSCHRIFT

(11) **EP 2 842 113 B1**
(45) Veröffentlichungstag und Bekanntmachung des Hinweises auf die Patenterteilung: **12.10.2016**
(21) Anmeldenummer: 13712719.7
(22) Anmeldetag: 15.03.2013
(51) Int. Cl.: G08B 25/01, G08G 1/00

(54) **VORRICHTUNG UND VERFAHREN ZUR AUSLÖSUNG EINES NOTRUFS IN EINEM KRAFTFAHRZEUG**
APPARATUS AND METHOD FOR TRIGGERING AN EMERGENCY CALL IN A MOTOR VEHICLE
DISPOSITIF ET PROCÉDÉ DE DÉCLENCHEMENT D'UN APPEL D'URGENCE DANS UN VÉHICULE AUTOMOBILE

(30) Priorität: 26.04.2012 DE 102012008382
(43) Veröffentlichungstag der Anmeldung: 04.03.2015
(73) Patentinhaber: Volkswagen Aktiengesellschaft, 38440 Wolfsburg (DE)
(72) Erfinder: VOGLER, Martin, 13505 Berlin (DE); JUNGE, Mirko, 31134 Hildesheim (DE); FICHTE, Michael, 32339 Espelkamp (DE)
(86) Internationale Anmeldenummer: PCT/EP2013/055360
(87) Internationale Veröffentlichungsnummer: WO 2013/160012

(56) Entgegenhaltungen:
- DE-A1- 10 021 076
- DE-A1-102006 048 161
- DE-A1-102008 038 492
- US-A- 5 497 149

## Beschreibung

Die Erfindung betrifft eine Vorrichtung und ein Verfahren zur Auslösung eines Notrufs in einem Kraftfahrzeug.

Mit einer Notruftelefoneinheit ausgestattete Kraftfahrzeug-Notrufendgeräte sind bekannt, wobei die Notruftelefoneinheit eine Anrufverbindung zu einem Notfallzentrum über eine Basisstation eines typischen Telekommunikationsnetzes herstellt. Die Kraftfahrzeug-Notrufendgeräte sind allgemein in zwei Bauarten unterteilt: bei der ersten Bauart wird ein Notrufknopf manuell zur Ausgabe eines Anrufsignals gedrückt und bei der zweiten Bauart wird ein Anrufsignal automatisch als Reaktion auf ein Ausgangssignal eines Airbagsensors oder eines Kollisionssensors ausgegeben. Einige der Kraftfahrzeug-Notrufendgeräte der ersten Bauart sind zur Erfassung einer unbeabsichtigten Trennung einer Signalleitung von dem Notrufknopf ausgeführt, woraus die Ausbildung eines offenen Stromkreises bzw. einer Stromkreisunterbrechung resultiert. Im Einzelnen beinhalten die Endgeräte dieser Bauart eine Steuerschaltung, die das Drücken des Notrufknopfes und eine Unterbrechung der zu dem Notrufknopf führenden Signalleitung zur Durchführung notwendiger Vorgänge überwacht. Die Verbindung des Notrufknopfes mit der Steuerschaltung wird über einen Schalter beim Drücken des Notrufknopfes hergestellt.

Aus der DE 100 21 076 C2 ist ein Notrufendgerät bekannt, das eine auf ein Anforderungssignal ansprechende Notrufschaltung zur Ausgabe eines Notrufsignals an ein vorausgewähltes Notfallzentrum und einen mit der Notrufschaltung verbundenen Notrufschalter umfasst, wobei der Notrufschalter ausgeführt ist, zwischen einem Ein-Zustand und einem Aus-Zustand geschaltet zu werden, wobei, wenn der Notrufschalter in den Ein-Zustand gebracht wird, das Anrufanforderungssignal der Notrufschaltung bereitgestellt wird. Weiter weist das Notrufendgerät eine Betriebszustandssignalerzeugungsschaltung auf, die ein erstes, ein zweites, ein drittes und ein viertes, im Spannungspegel voneinander unterschiedliches Betriebszustandssignal erzeugt, um zu ermöglichen, dass die Notrufschaltung den Ein-Zustand, den Aus-Zustand, einen stromkreisunterbrechungsbedingten Fehler und einen kurzschlussbedingten Fehler unterscheidet, wobei das erste Betriebszustandssignal erzeugt wird, wenn der Notrufschalter sich im Ein-Zustand befindet, das zweite Betriebszustandssignal erzeugt wird, wenn der Notrufschalter sich im Aus-Zustand befindet, das dritte Betriebszustandssignal erzeugt wird, wenn der stromkreisunterbrechungsbedingte Schaltfehler sich aus einer Ausbildung einer Stromkreisunterbrechung der Notrufschaltung aufgrund einer Trennung der Notrufschaltung von dem Notrufschalter ergibt, das vierte Betriebszustandssignal erzeugt wird, wenn der kurzschlussbedingte Fehler sich aus deiner Ausbildung eines Kurzschlusses der Notrufschaltung ergibt.

Aus der DE 10 2008 038 492 A1 ist eine Vorrichtung zur automatischen Absetzung eines Notrufs bekannt, wobei das auslösende Ereignis beispielsweise ein Signal eines Beschleunigungssensors ist. Dabei ist weiter vorgesehen, dass, wenn ein Notfall erkannt wird, wie z.B. durch einen Beschleunigungssensor, die Absicht akustisch, optisch, haptisch angezeigt wird, einen Notruf abzusetzen. Wird dieser Absicht innerhalb einer kurzen Zeit von beispielsweise 5 Sekunden durch den Fahrer nicht widersprochen (z.B. durch einen Tastendruck an der Mobilfunkeinheit), so wird der Notruf abgesetzt. Handelt es sich um eine Fehlererkennung, so widerspricht der Fahrer und der Notruf wird nicht abgesetzt. Durch diese Möglichkeit des Widerspruchs durch den Fahrer kann die Erkennungsschwelle für den automatischen Notruf kleiner gewählt werden und damit ein Notfall sicherer erkannt werden.

Aus der DE 10 2009 012 628 A1 ist eine Anordnung zum Senden eines Notrufs mit einem in einem Fahrzeug befindlichen, für Fahrzeugfunktionen notwendigen bzw. unentbehrlichen Modul und einem in das für Fahrzeugfunktionen notwendigen Modul integrierten mobilen Telefon-Transceiver bekannt, wobei das für Fahrzeugfunktionen notwendige Modul ausgebildet ist, über den integrierten mobilen Telefon-Transceiver einen Notruf zu aktivieren. Dabei wird der Notruf manuell und/oder automatisch nach Eintreten eines bestimmten Ereignisses ausgelöst. Dabei ist weiter offenbart, dass das für Fahrzeugfunktionen notwendige Modul über Kommunikationsleitungen mit weiteren Fahrzeugfunktionen notwendigen Modulen der Fahrzeugelektronik des Fahrzeugs verbunden ist, wobei das bestimmte Ereignis zur Absetzung eines Notrufs eine Unterbrechung der Kommunikationsleitungen zu dem für Fahrzeugfunktionen notwendigen Modul ist.

Aus der US 5,497,149 A ist eine Vorrichtung zur Auslösung eines Notrufs in einem Kraftfahrzeug bekannt, wobei die Vorrichtung mindestens ein Modul zum Kommunikationsaufbau mit einer fahrzeugexternen Einrichtung aufweist, wobei dem Modul mindestens eine Auswerteeinrichtung zugeordnet ist, wobei bei Erfassung mindestens eines vorab definierten Zustandes oder Ereignisses das Modul automatisch einen Notruf absetzt, wobei dem Modul ein manueller Notruf-Taster zugeordnet ist, der über mindestens eine Verbindungsleitung mit dem Modul verbunden ist.

Der Erfindung liegt das technische Problem zugrunde, eine Vorrichtung und ein Verfahren zur Auslösung eines Notrufs in einem Kraftfahrzeug zu schaffen, mittels derer eine verbesserte Zuverlässigkeit erreichbar ist.

Die Lösung des technischen Problems ergibt sich durch die Gegenstände mit den Merkmalen der Ansprüche 1 und 6. Weitere vorteilhafte Ausgestaltungen der Erfindung ergeben sich aus den Unteransprüchen.

Die Vorrichtung zur Auslösung eines Notrufs in einem Kraftfahrzeug weist mindestens ein Modul zum Kommunikationsaufbau mit einer fahrzeugexternen Einrichtung auf. Beispielsweise ist das Modul als GSM-Modul ausgebildet und die fahrzeugexterne Einrichtung ist ein zentrales oder lokales Notfallzentrum. Dem Modul ist mindestens eine Auswerteeinrichtung zugeordnet, wobei bei Erfassung mindestens eines vorab definierten Zustandes oder Ereignisses das Modul automatisch einen Notruf absetzt. Weiter ist dem Modul ein manueller Notruf-Taster zugeordnet, der über mindestens eine Verbindungsleitung mit dem Modul verbunden ist, wobei das Modul Mittel zur Überprüfung der mindestens einen Verbindungsleitung aufweist, wobei bei einem erfassten Defekt der mindestens einen Verbindungsleitung automatisch ein Notruf durch das Modul abgesetzt wird. Damit wird sichergestellt, dass in Fehlerfällen der Verbindungsleitung, wo über den Notruf-Taster kein Verbindungsaufbau für eine Kommunikation angefordert werden kann, dies automatisch erfolgt. Wird daher beispielsweise aufgrund eines Unfalls die Verbindungsleitung getrennt, erfolgt dennoch automatisch ein Notruf. Dabei kann vorgesehen sein, dass üblicherweise nur manuell ein Notruf durch Betätigen des Notruf-Tasters erfolgt und nur bei Defekt der Verbindungsleitung der Notruf automatisch erfolgt. Es kann aber auch vorgesehen sein, dass auch bei weiteren Zuständen oder Ereignissen automatisch ein Notruf erzeugt wird, beispielsweise wenn ein Beschleunigungssensor eine Verzögerung größer als ein Grenzwert erfasst. Diese Beschleunigungssensoren können beispielsweise Bestandteil einer Airbag-Steuerung sein.

Dabei ist der Notruf-Taster in einem Dachmodul des Kraftfahrzeugs angeordnet und mindestens eine Verbindungsleitung durch oder an einer A-Säule des Kraftfahrzeugs verlegt. Der Vorteil der Anordnung im Dachmodul ist die gute Erreichbarkeit für den Kraftfahrzeugführer und gleichzeitig auch für den Beifahrer. Allerdings kann es insbesondere bei Unterfahrunfällen dazu kommen, dass Teile vom Fahrzeugdach abgeschert werden. Da nun aber die Verbindungsleitung mindestens teilweise durch oder an der A-Säule verlegt ist, wird diese in einem solchen Fall getrennt, sodass dann automatisch der Notruf abgesetzt wird. Die Verbindungsleitung wirkt somit gleichzeitig als Sensor für Unterfahrunfälle.

In einer Ausführungsform ist dem Modul ein Fahrzeuggeschwindigkeitssignal zuführbar, wobei ein automatischer Notruf nur bei Fahrzeuggeschwindigkeiten größer einer Grenzgeschwindigkeit, die beispielsweise zwischen 5 bis 15 km/h liegt, abgesetzt wird. Somit wird das Risiko einer Fehlauslösung, z.B. bei Demontage des Notruf-Tasters im Stand, verringert. Des Weiteren ist es denkbar, das Geschwindigkeitssignal mit dem Signal eines Sitzbelegungssensors zu kombinieren, sodass bei Auffahrunfällen hingegen wieder ein automatischer Notruf erfolgt.

In einer weiteren Ausführungsform wird die Absicht einer automatischen Absetzung eines Notrufs signalisiert, wobei mittels mindestens eines Eingabemittels die automatische Absetzung unterdrückbar ist. Auch hierdurch wird die Gefahr von fehlerhaften Notrufen reduziert. Dabei wird vorzugsweise eine Zeitspanne festgelegt, innerhalb derer der Nutzer über das Eingabemittel den Notruf unterdrücken kann. Die Zeitspanne liegt beispielsweise zwischen 3 bis 15 Sekunden, insbesondere 5 oder 10 Sekunden.

In einer weiteren Ausführungsform umfasst die Vorrichtung eine Anzeigeeinheit und/oder eine Sprachausgabeeinheit, mittels derer die Absicht einer automatischen Absetzung eines Notrufs signalisiert wird. Alternativ oder ergänzend kann auch eine haptische Signalisierung erfolgen.

In einer weiteren Ausführungsform ist das Eingabemittel als Taster, Bedienfeld (z.B. ein Eingabefeld auf einem Touchscreen) und/oder als Spracheingabeeinrichtung ausgebildet.

Die Erfindung wird nachfolgend anhand eines bevorzugten Ausführungsbeispiels näher erläutert. Die Fig. zeigen:
- Fig. 1: eine Seitenansicht eines Kraftfahrzeugs und
- Fig. 2: ein schematisches Blockschaltbild einer Vorrichtung zur Auslösung eines Notrufs in einem Kraftfahrzeug.

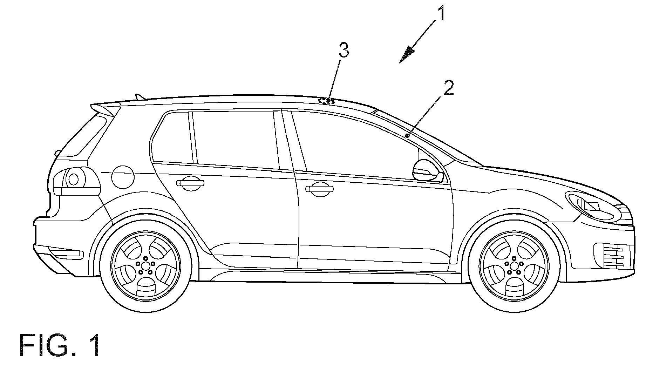

In der Fig. 1 ist ein Kraftfahrzeug 1 in einer Seitenansicht dargestellt. Dabei ist eine A-Säule 2 zu erkennen sowie ein Dachmodul 3, wobei das Dachmodul 3 gestrichelt dargestellt ist, da dieses vom Fahrzeuginnenraum in einen Dachhimmel integriert ist.

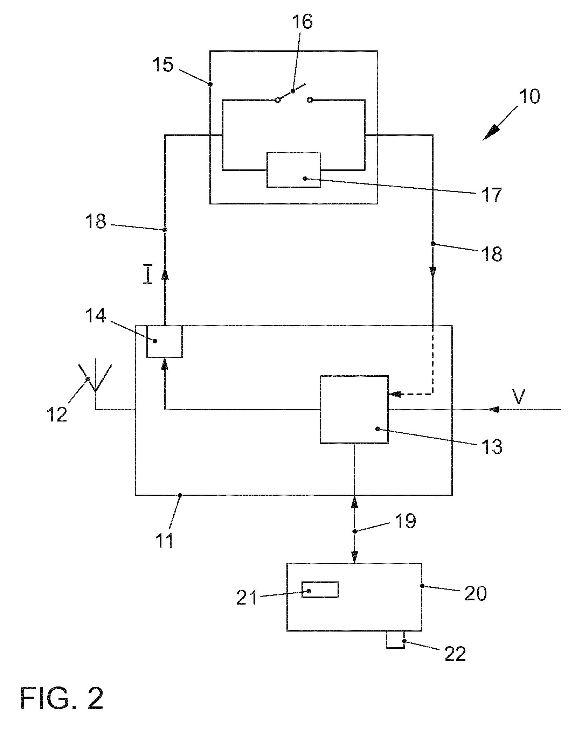

In der Fig. 2 ist ein Blockschaltbild der Vorrichtung 10 zur Auslösung eines Notrufs in einem Kraftfahrzeug 1 (siehe Fig. 1) dargestellt. Die Vorrichtung 10 umfasst ein Modul 11 zum Kommunikationsaufbau mit einer nicht dargestellten fahrzeugexternen Einrichtung. Das Modul 11 umfasst eine Antenne 12, eine Auswerteeinrichtung 13 und eine Spannungsquelle 14. Weiter umfasst die Vorrichtung 10 ein Tastermodul 15 mit einem Notruf-Taster 16 und einer Diagnoseschaltung 17, die parallel zum Notruf-Taster 16 geschaltet ist. Die Diagnoseschaltung 17 ist dabei beispielsweise ein hochohmiger Widerstand. Das Tastermodul 15 ist dabei in ein Dachmodul 3 des Kraftfahrzeugs 1 integriert (siehe Fig. 1). Das Modul 11 und das Tastermodul 15 sind über Verbindungsleitungen 18 miteinander verbunden, die durch die A-Säule 2 (siehe Fig. 1) verlegt sind. Weiter ist das Modul 11 über eine Busverbindung 19 mit einer Anzeigeeinheit 20 verbunden, auf der ein Bedienfeld 21 dargestellt ist. Weiter ist der Anzeigeeinheit 20 ein Taster 22 zugeordnet. Schließlich wird dem Modul 11 noch die Fahrzeuggeschwindigkeit V übermittelt, wobei dies vorzugsweise ebenfalls über eine Busverbindung wie beispielsweise eine CAN-Busverbindung erfolgt.

Über die Spannungsquelle 14 wird eine Prüfspannung zwischen den Verbindungsleitungen 18 angelegt, sodass ein Prüfstrom I fließt, der dann in der Auswerteeinheit 13 ausgewertet wird. Solange die Auswerteeinheit 13 den Prüfstrom I erfasst, ist die Verbindungsleitung 18 in Ordnung. Wird hingegen kein Prüfstrom I erfasst, so ist die Verbindungsleitung 18 unterbrochen oder weist einen Kurzschluss gegen Masse auf, wobei ein Kurzschluss gegen eine Versorgungsspannung aufgrund eines extrem hohen Prüfstroms vom Normalzustand unterschieden werden kann. Bei einer Betätigung des Notruf-Tasters 16 reduziert sich der Widerstand, sodass auch der Prüfstrom I steigt, jedoch nicht so stark wie bei einem Kurzschluss gegen Versorgungsspannung.

Kommt es nun zu einer Notfallsituation, kann ein Fahrzeugführer den Notruf-Taster 16 betätigen. Dies wird von der Auswerteeinheit 13 anhand des gestiegenen Prüfstroms I erfasst und über die Antenne 12 bzw. ein nicht dargestelltes GSM-Modul wird eine Telekommunikationsverbindung aufgebaut und ein Notruf abgesetzt.

Erfasst nun die Auswerteeinheit 13 einen Defekt der Verbindungsleitung 18, so überprüft die Auswerteeinheit 13 weiter, ob die Fahrzeuggeschwindigkeit bzw. ein
Fahrzeuggeschwindigkeitssignal V größer einer Grenzgeschwindigkeit V_{grenz} (z.B. 15 km/h) ist. Ist dies der Fall, so wird automatisch durch das Modul 11 ein Notruf vorbereitet. Die Auswerteeinheit 13 übermittelt dann eine Nachricht über den beabsichtigten automatischen Notruf an die Anzeigeeinheit 20. Auf der Anzeigeeinheit 20 wird dann beispielsweise eine Textnachricht eingeblendet, wo darauf hingewiesen wird, dass in zehn Sekunden ein automatischer Notruf abgesendet wird. Mittels des Bedienfeldes 21 kann dann der Kraftfahrzeugführer den automatischen Notruf abbrechen. Alternativ oder ergänzend kann der Kraftfahrzeugführer durch Betätigung des Tasters 22 den automatischen Notruf abbrechen bzw. unterdrücken. Die verbleibende Zeit bis zur Absendung des Notrufs kann dabei auch in der Form eines Count-Downs auf der Anzeigeeinheit 20 dargestellt werden.

## Patentansprüche

1. Vorrichtung (10) zur Auslösung eines Notrufs in einem Kraftfahrzeug (1), wobei die Vorrichtung (10) mindestens ein Modul (11) zum Kommunikationsaufbau mit einer fahrzeugexternen Einrichtung aufweist, wobei dem Modul (11) mindestens eine Auswerteeinrichtung (13) zugeordnet ist, wobei das Modul (11) derart gestaltet ist, dass es bei Erfassung mindestens eines vorab definierten Zustandes oder Ereignisses automatisch einen Notruf absetzt, wobei dem Modul (11) ein manueller Notruf-Taster (16) zugeordnet ist, der über mindestens eine Verbindungsleitung (18) mit dem Modul (11) verbunden ist,
**dadurch gekennzeichnet, dass**
das Modul (11) Mittel zur Überprüfung der mindestens einen Verbindungsleitung (18) aufweist und derart gestaltet ist, dass es bei einem erfassten Defekt der mindestens einen Verbindungsleitung (18) automatisch einen Notruf absetzt, wobei der Notruf-Taster (16) in einem Dachmodul (3) des Kraftfahrzeugs (1) angeordnet ist und die mindestens eine Verbindungsleitung (18) durch eine oder an einer A-Säule (2) des Kraftfahrzeugs (1) verlegt ist.

2. Vorrichtung nach Anspruch 1, **dadurch gekennzeichnet, dass** dem Modul (11) ein Fahrzeuggeschwindigkeitssignal (V) zugeführt ist, wobei das Modul (11) derart gestaltet ist, dass es einen automatischen Notruf nur bei Fahrzeuggeschwindigkeiten (V) größer einer Grenzgeschwindigkeit (V_{grenz}) absetzt .

3. Vorrichtung nach einem der vorangegangenen Ansprüche, **gekennzeichnet durch** ein Mittel zum Signalisieren der Absicht einer automatischen Absetzung eines Notrufs und **durch** mindestens ein Eingabemittel zur Unterdrückung der automatischen Absetzung.

4. Vorrichtung nach Anspruch 3, **dadurch gekennzeichnet, dass** das Mittel zum Signalisieren der Absicht einer automatischen Absetzung eines Notrufs eine Anzeigeeinheit (20) und/oder eine Sprachausgabeeinheit umfasst.

5. Vorrichtung nach Anspruch 3 oder 4, **dadurch gekennzeichnet, dass** das Eingabemittel als Taster (22), Bedienfeld (21) und/oder als Spracheingabeeinrichtung ausgebildet ist.

6. Verfahren zur Auslösung eines automatischen Notrufs in einem Kraftfahrzeug (1), mittels mindestens einem Modul (11) zum Kommunikationsaufbau mit einer fahrzeugexternen Einrichtung, wobei dem Modul (11) mindestens eine Auswerteeinrichtung (13) zugeordnet ist, wobei bei Erfassung mindestens eines vorab definierten Zustandes oder Ereignisses das Modul (11) automatisch einen Notruf absetzt, wobei dem Modul (11) ein manueller Notruf-Taster (26) zugeordnet ist, der über mindestens eine Verbindungsleitung (18) mit dem Modul (11) verbunden ist,
**dadurch gekennzeichnet, dass**
das Modul (11) die mindestens eine Verbindungsleitung (18) überprüft und bei einem erfassten Defekt der mindestens einen Verbindungsleitung (18) automatisch einen Notruf absetzt,
wobei der Notruf-Taster (16) in einem Dachmodul (3) des Kraftfahrzeugs (1) angeordnet ist und die mindestens eine Verbindungsleitung (18) durch eine oder an einer A-Säule (2) des Kraftfahrzeugs (1) verlegt ist.

7. Verfahren nach Anspruch 6, **dadurch gekennzeichnet, dass** dem Modul (11) ein Fahrzeuggeschwindigkeitsgrad (V) zugeführt wird, wobei ein automatischer Notruf nur bei Fahrzeuggeschwindigkeiten (V) größer einer Grenzgeschwindigkeit (V_{grenz}) abgesetzt wird.

8. Verfahren nach einem der Ansprüche 6 oder 7, **dadurch gekennzeichnet, dass** die Absicht einer automatischen Absetzung eines Notrufs signalisiert wird, wobei mittels mindestens eines Eingabemittels die automatische Absetzung unterdrückbar ist.

## Claims

1. Apparatus (10) for triggering an emergency call in a motor vehicle (1) wherein the apparatus (10) comprises at least one module (11) for setting up communication with a device external to the vehicle, wherein at least one evaluation device (13) is assigned to the module (11), wherein the module (11) is designed in such a way that it automatically transmits an emergency call when at least one predefined state or event is detected, wherein a manual emergency call button (16) is assigned to the module (11), said emergency call button being connected to the module (11) via at least one connecting line (18),
**characterized in that**
the module (11) comprises means for checking the at least one connecting line (18) and is designed in such a way that it automatically transmits an emergency call in the case of a detected defect of the at least one connecting line (18), wherein the emergency call button (16) is arranged in a roof module (3) of the motor vehicle (1) and the at least one connecting line (18) is laid through or on an A-pillar (2) of the motor vehicle (1).

2. Apparatus according to Claim 1, **characterized in that** a vehicle speed level (V) is fed to the module (11), wherein the module (11) is designed in such a way that it transmits an automatic emergency call only at vehicle speeds (V) greater than a limit speed (limit).

3. Apparatus according to either of the preceding claims, **characterized by** a means for signalling the intention of automatically transmitting an emergency call, and by at least one input means for suppressing the automatic transmission.

4. Apparatus according to Claim 3, **characterized in that** the means for signalling the intention of automatically transmitting an emergency call comprises a display unit (20) and/or a voice input unit.

5. Apparatus according to Claim 3 or 4, **characterized in that** the input means is embodied as a button (22), an operating panel (21) and/or as a voice input device.

6. Method for triggering an automatic emergency call in a motor vehicle (1), by means of at least one module (11) for setting up communication with a device external to the vehicle, wherein at least one evaluation device (13) is assigned to the module (11), wherein the module (11) automatically transmits an emergency call when at least one predefined state or event is detected, wherein a manual emergency call button (26) is assigned to the module (11), said emergency call button being connected to the module (11) via at least one connecting line (18),
**characterized in that**
the module (11) checks the at least one connecting line (18) and automatically transmits an emergency call in the case of a detected defect of the at least one connecting line (18), wherein the emergency call button (16) is arranged in a roof module (3) of the motor vehicle (1) and the at least one connecting line (18) is laid through or on an A-pillar (2) of the motor vehicle (1).

7. Method according to Claim 6, **characterized in that** a vehicle speed level (V) is fed to the module (11), wherein an automatic emergency call is transmitted only at vehicle speeds (V) greater than a limit speed (limit).

8. Method according to either of Claims 6 and 7, **characterized in that** the intention of automatically transmitting an emergency call is signalled, wherein the automatic transmission is suppressible by means of at least one input means.

## Revendications

1. Dispositif (10) destiné à déclencher un appel d'urgence dans un véhicule automobile (1), dans lequel le dispositif (10) comporte au moins un module (11) destiné à établir une communication avec un dispositif extérieur au véhicule, dans lequel au moins un dispositif d'évaluation (13) est associé au module (11), dans lequel le module (11) est conçu de manière à établir automatiquement un appel d'urgence lors de la détection d'au moins un état ou un événement défini à l'avance, dans lequel un bouton d'appel d'urgence manuel (16) est associé au module (11), lequel bouton d'appel d'urgence est connecté au module (11) par l'intermédiaire d'au moins une ligne de connexion (18), **caractérisé en ce que** le module (11) comporte des moyens destinés à vérifier l'au moins une ligne de connexion (18) et est conçu de manière à établir automatiquement un appel d'urgence lors de la détection d'un défaut de l'au moins une ligne de connexion (18), dans lequel le bouton d'appel d'urgence (16) est disposé dans un module de toit (3) du véhicule automobile (1) et l'au moins une ligne de connexion (18) est amenée à passer à travers ou sur un montant A (2) du véhicule automobile (1).

2. Dispositif selon la revendication 1, **caractérisé en ce qu'**un signal de vitesse de véhicule (V) est envoyé au module (11), dans lequel le module (11) est conçu pour n'établir automatiquement un appel d'urgence que pour des vitesses (V) du véhicule supérieures à une vitesse limite (Vₗᵢₘᵢₜₑ).

3. Dispositif selon l'une quelconque des revendications précédentes, **caractérisé par** un moyen destiné à signaler l'imminence de l'établissement automatique d'un appel d'urgence et par au moins un moyen d'entrée destiné à supprimer l'établissement automatique.

4. Dispositif selon la revendication 3, **caractérisé en ce que** le moyen destiné à signaler l'imminence d'un établissement automatique d'un appel d'urgence comprend une unité d'affichage (20) et/ou une unité de sortie vocale.

5. Dispositif selon la revendication 3 ou 4, **caractérisé en ce que** le moyen d'entrée est réalisé sous la forme d'un bouton (22), d'un tableau de commande (21) et/ou d'un dispositif d'entrée vocale.

6. Procédé de déclenchement d'un appel d'urgence automatique dans un véhicule automobile (1), au moyen d'au moins un module (11) destiné à établir une communication avec un dispositif extérieur au véhicule, dans lequel au moins un dispositif d'évaluation (13) est associé au module (11), dans lequel le module (11) établit automatiquement un appel d'urgence lors de la détection d'au moins un état ou événement défini à l'avance, dans lequel un bouton d'appel d'urgence manuel (26) est associé au module (11), lequel bouton d'appel d'urgence est connecté au module (11) par l'intermédiaire d'au moins une ligne de connexion (18), **caractérisé en ce que** le module (11) vérifie l'au moins une ligne de connexion (18) et établit automatiquement un appel d'urgence lorsqu'un défaut de l'au moins une ligne de connexion (18) est détecté, dans lequel le bouton d'appel d'urgence (16) est disposé dans un module de toit (3) du véhicule automobile (1) et l'au moins une ligne de connexion (18) est amenée à passer à travers ou sur un montant A (2) du véhicule automobile (1).

7. Procédé selon la revendication 6, **caractérisé en ce qu'**un degré de vitesse de véhicule (V) est envoyé au module (11), dans lequel un appel d'urgence automatique n'est établi que pour des vitesses (V) du véhicule supérieures à une vitesse limite (Vₗᵢₘᵢₜₑ).

8. Procédé selon l'une quelconque des revendications 6 ou 7, **caractérisé en, ce que** l'imminence de l'établissement automatique d'un appel d'urgence est signalée, dans lequel l'établissement automatique peut être supprimée au moyen d'au moins un moyen d'entrée.
